# EUROPEAN PATENT SPECIFICATION

(11) **EP 2 273 374 B1**
(45) Date of publication and mention of the grant of the patent: **26.06.2019**
(21) Application number: 10250977.5
(22) Date of filing: 26.05.2010
(51) Int. Cl.: G06F 12/10

(54) **Automatically using superpages for stack memory allocation**
Automatische Verwendung von Superseiten zur Zuordnung eines Stapelspeichers
Utilisation automatique de superpages pour l'affectation de mémoire empilée

(30) Priority: 30.06.2009 US 495509
(43) Date of publication of application: 12.01.2011
(73) Proprietor: Intel Corporation, Santa Clara, CA 95054 (US)
(72) Inventor: Zhao, Li, Beaverton Oregon 97006 (US); Fang, Zhen, Portland Oregon 97229 (US); Iver, Ravishankar, Portland Oregon 97229 (US); Newell, Donald, Portland Oregon 97229 (US)
(74) Representative: Maiwald Patent- und Rechtsanwaltsgesellschaft mbH

(56) References cited:
- EP-A2- 0 465 322
- JUAN NAVARRO ET AL: "Practical, transparent operating system support for superpages", OPERATING SYSTEMS REVIEW, ACM, NEW YORK, NY, US, vol. 36, no. SI, 31 December 2002 (2002-12-31), pages 89-104, XP058141968, ISSN: 0163-5980, DOI: 10.1145/844128.844138

## Description

### Background

In modern processors, translation lookaside buffers (TLBs) store address translations from a virtual address (VA) to a physical address (PA). These address translations are generated by the Operating system (OS) and stored in memory within page table data structures, which are used to populate the TLB. TLB misses tend to incur a significant time penalty. This problem was explored in "Energy Efficient D-TLB and Data Cache using Semantic-Aware Multilateral Partitioning", Hsien-Hsin S. Lee and Chinnakrishnan S. Ballapuram, ISLPED '03, August 25-27, 2003, pages 306-311. The proposal to partition a data TLB, however, would require extensive hardware redesign.

EP 0465322 describes using a variable memory page size so that entries in a translation buffer for implementing virtual addressing can be optimally used. (Juan Navarro et al.: "Practical, transparent operating system support for superpages", Operating Systems Review vol. 36, no. SI, ACM, New York (2002), pages 89-104, ISSN: 0163-5980, doi: 10.1145/844128.844138) discloses systems and methods to increase the proportion of the total system memory that is covered by TLB entries, by making TLB entries refer to larger superpages rather than to mere base pages.

### Summary

Aspects of the present invention are set out in the appended independent claims. Embodiments of the invention are defined in the dependent claims. The use of the word "embodiment" below in the description merely implies the illustration of examples or exemplary embodiments, if not otherwise defined by the appended claims. The scope of the invention is thus defined by the claims, and embodiments that are not covered by the claims are not part of the invention.

### Brief Description of the Drawings

FIG. 1 is a block diagram of application data in accordance with one embodiment of the present invention.
FIG. 2 is a block diagram of example locations of address translation storage capabilities in accordance with an embodiment of the present invention.
FIG. 3 is a block diagram of the interaction between various components in accordance with an embodiment of the present invention.
FIG. 4 is a flow chart for automatically using superpages for stack memory allocation in accordance with an embodiment of the present invention.
FIG. 5 is a block diagram of a system in accordance with an embodiment of the present invention.

### Detailed Description

In various embodiments, page table and TLB entries may automatically use superpages for stack memory allocation. One skilled in the art would recognize that this may help prevent stack growth from causing a costly TLB miss and page fault. Many processor designs presently include the ability to create superpages with some designs limiting their use to certain TLB entries. The embodiments are: intended to be practiced with any TLB design that provides for superpages (or pages that reference larger portions of memory than a normal size page).

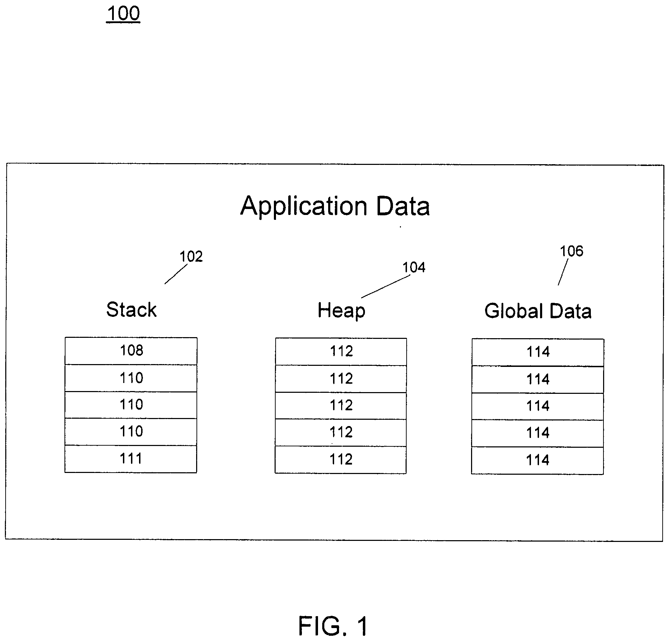

Referring now to FIG. 1, shown is a block diagram of application data in accordance with one embodiment of the present invention. As shown in FIG. 1, application data 100
may include stack 102 with bottom entry 108, following entries 110 and top entry 111, heap
104 with heap entries 112 and global data 106 with global data entries 114. Stack 102 may grow as following entries 110 are pushed onto the stack, increasing the amount of memory needed to support stack 102. Bottom entry 108 would have a known address upon which following entries are added. A pointer, for example a register, may maintain a current top address for top entry 111.

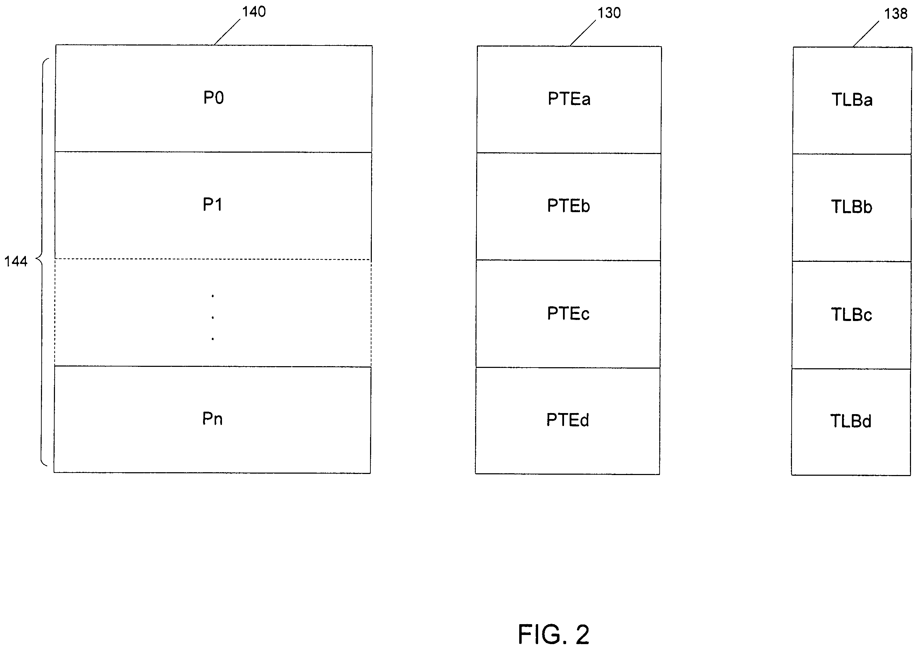

Referring now to FIG. 2, shown is a block diagram of example locations of address translation storage capabilities in accordance with an embodiment of the present invention. As shown in FIG. 2, main memory 140 may include multiple page frames in a page frame storage area 144. More specifically, page frames P₀ - P_{N} may be present. Page table 130 may store various page table entries, PTE_{A-D}, each of which may correspond to one of the page frames P_{X} stored in page frame area 144. TLB 138 may store various TLB entries, TLB_{A-D}, each of which may correspond to one of the page table entries, PTE_{A-D}, for one of the page frames P_{X} stored in page frame area 144. Page frames P₀ - P_{N} may have consistently spaced boundaries or may come in various sizes. In one embodiment, page table 130 may contain entries that reference superpages, for example multiple contiguous page frames, for example, P₀ - P₄. In one embodiment, normal size page frames P₀ - P_{N} are 4 kilobytes in size while superpages are 2 megabytes in size (or 512 contiguous normal size page frames). In one embodiment, a superpage can have a size chosen from a predetermined group of sizes, for example a superpage may be able to scale to any one of 8K, 64K, 512K, or 4M. TLB 138 may have certain entries designated for referencing superpages or may limit the number of entries that may reference superpages.

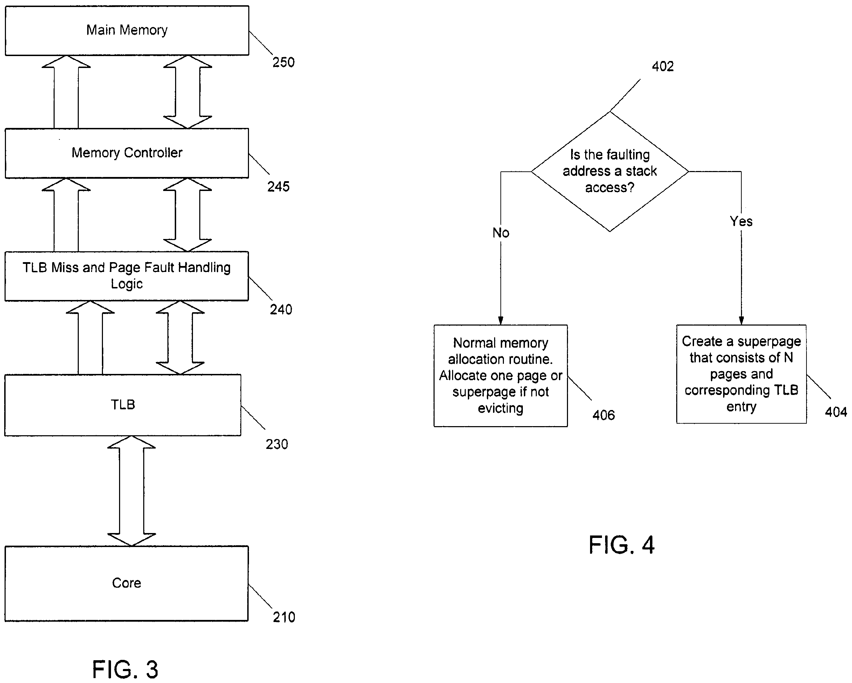

Referring now to FIG. 3, shown is a block diagram of an interaction between various components in accordance with an embodiment of the present invention. As shown in FIG. 3, to map memory addresses various components may interact. Specifically, the core may request information present in a particular page of main memory 250. Accordingly, core 210 provides an address to both a TLB 230 (which includes translation information. If the corresponding PA-to-VA translation is not present in TLB 230, a TLB miss may be indicated and if there is no page table entry a page fault would occur. This would be handled by TLB miss and page fault handling logic (TMPFHL) 240 which in turn may provide the requested address to a memory controller 245 which in turn is coupled to main memory 250 to thus enable loading of a page table entry into TLB 230. TMPFHL 240 may implement a method for automatically using superpages for stack memory allocation as shown below with reference to Fig. 4. TMPFHL 240 may be implemented in OS kernel software or firmware or hardware or a combination of hardware or software.

Referring now to FIG. 4, shown is a flow chart for automatically using superpages for stack memory allocation in accordance with an embodiment of the present invention. As shown in FIG. 4, the method begins with responding to a page fault by determining (402) whether a faulting address is a stack access. In one embodiment, TMPFHL 240 determines whether or not a faulting address is a stack access by comparing the faulting address to the address of stack top entry 111 to decide if the address is a stack access. In another embodiment, TMPFHL 240 determines that a faulting address is a stack access if the architectural register that is used to pass the faulting address is the frame pointer, for example EBP, or the stack pointer, for example ESP. In another embodiment, TMPFHL 240 determines whether or not a faulting address is a stack access by looking at the highest order bit of a user-mode application's address. If the most significant bit of the faulting address is a 1, then it is a stack access. In another embodiment, the load/store instruction carries a special bit to explicitly tell TMPFHL 240 whether or not the faulting address is a stack access. If the page fault did result from a stack access, then TMPFHL 240 would create (404) a superpage for the access in page table 130 and a corresponding entry in TLB 138.

If it is determined that the page fault did not result from a stack access, then TMPFHL 240 would follow (406) a different memory allocation routine. In one embodiment, the memory allocation routine for a non-stack access would be to create one normal size page in page table 130. In another embodiment, the memory allocation routine for a non-stack access would be to create a superpage in page tables 130.

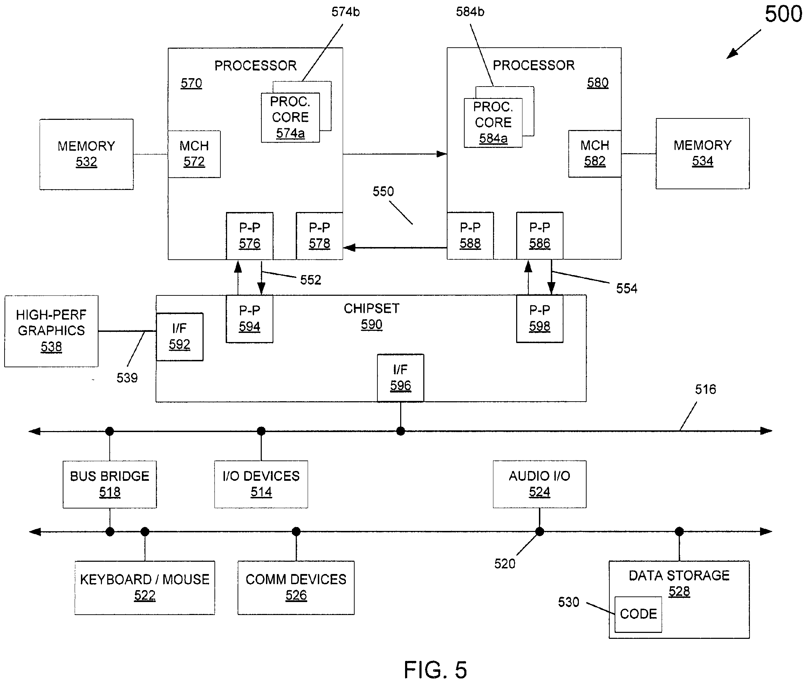

Embodiments may be implemented in many different system types. Referring now to FIG. 5, shown is a block diagram of a system in accordance with an embodiment of the present invention. As shown in FIG. 5, multiprocessor system 500 is a point-to-point interconnect system, and includes a first processor 570 and a second processor 580 coupled via a point-to-point interconnect 550. As shown in FIG. 5, each of processors 570 and 580 may be multicore processors, including first and second processor cores (i.e., processor cores 574a and 574b and processor cores 584a and 584b). Each processor may include TLB hardware, software, and firmware in accordance with an embodiment of the present invention.

Still referring to FIG. 5, first processor 570 further includes a memory controller hub (MCH) 572 and point-to-point (P-P) interfaces 576 and 578. Similarly, second processor 580 includes a MCH 582 and P-P interfaces 586 and 588. As shown in FIG. 5, MCH's 572 and 582 couple the processors to respective memories, namely a memory 532 and a memory 534, which may be portions of main memory (e.g., a dynamic random access memory (DRAM)) locally attached to the respective processors, each of which may include extended page tables in accordance with one embodiment of the present invention. First processor 570 and second processor 580 may be coupled to a chipset 590 via P-P interconnects 552 and 554, respectively. As shown in FIG. 5, chipset 590 includes P-P interfaces 594 and 598.

Furthermore, chipset 590 includes an interface 592 to couple chipset 590 with a high performance graphics engine 538. In turn, chipset 590 may be coupled to a first bus 516 via an interface 596. As shown in FIG. 5, various I/O devices 514 may be coupled to first bus 516, along with a bus bridge 518 which couples first bus 516 to a second bus 520. Various devices may be coupled to second bus 520 including, for example, a keyboard/mouse 522, communication devices 526 and a data storage unit 528 such as a disk drive or other mass storage device which may include code 530, in one embodiment. Further, an audio I/O 524 may be coupled to second bus 520.

Embodiments may be implemented in code and may be stored on a storage medium having stored thereon instructions which can be used to program a system to perform the instructions. The storage medium may include, but is not limited to, any type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present invention has been described with respect to a limited number of embodiments, those skilled in the art will appreciate numerous modifications and variations therefrom. It is intended that the appended claims cover all such modifications and variations as fall within the scope of this present invention as defined by the appended claims.

## Claims

1. A method of operating a system (500), the method performed by the system comprising the steps of:
responding (402) to a page fault by determining if the page fault resulted from a stack access;
creating (404) a superpage in a page table (130) and creating (404) a corresponding translation lookaside buffer, TLB (138), entry for the superpage if the page fault did result from a stack access; and
creating (406) a normal size page in the page table (130) if the page fault did not result from a stack access,
**characterized in that** the step of responding to a page fault by determining if the page fault resulted from a stack access comprises determining that the page fault results from a stack access if the most significant bit of the faulting address is a 1.

2. The method of claim 1, wherein the superpage comprises a plurality of contiguous normal size pages (Pₙ).

3. The method of claim 1, wherein the normal size page comprises 4 kilobytes.

4. The method of claim 1, wherein the superpage comprises 2 megabytes.

5. The method of claim 1, wherein the superpage comprises a size chosen from a predetermined group of sizes.

6. A system (500) comprising:
a processor (570) including a first core (574a) adapted to execute instructions, a translation lookaside buffer, TLB, (138) coupled to the first core, the TLB adapted to store a plurality of entries (TLBa-TLBd) each having a translation portion to store a virtual address, VA,-to-physical address, PA, translation;
a dynamic random access memory, DRAM, (532) coupled to the processor, the DRAM being operable to store a page table (130) including page table entries (PTE) for a plurality of memory pages in the DRAM, the page table located in kernel level space; and
a page fault handler (240) adapted to create page table entries and TLB (138) entries in response to a page fault, the page fault handler being adapted to determine if a page fault resulted from a stack access, and to:
create a superpage table entry in the page table (130) and create a corresponding TLB (138) entry for the superpage if the page fault did result from a stack access, and
create a normal size page table entry in the page table (130) if the page fault did not result from a stack access,
**characterized in that**
the page fault handler (240) is adapted to determine that the page fault results from a stack access if the most significant bit of the faulting address is a 1.

7. The system of claim 6, wherein the superpage comprises a plurality of contiguous normal size pages.

8. The system of claim 6, wherein the normal size page comprises 4 kilobytes.

9. The system of claim 6, wherein the superpage comprises a size chosen from a predetermined group of sizes.

## Patentansprüche

1. Verfahren zum Betreiben eines Systems (500), wobei das vom System durchgeführte Verfahren die Schritte umfasst:
Reagieren (402) auf einen Seitenfehler durch Bestimmen, ob der Seitenfehler die Folge eines Stapelzugriffs ist;
Erzeugen (404) einer Superseite in einer Seitentabelle (130) und Erzeugen (404) eines entsprechenden Übersetzungspuffer (Translation Lookaside Buffer, TLB) -Eintrags für die Superseite, falls der Seitenfehler die Folge eines Stapelzugriffs ist; und
Erzeugen (406) einer Seite normaler Größe in der Seitentabelle (130), falls der Seitenfehler nicht die Folge eines Stapelzugriffs ist,
**dadurch gekennzeichnet, dass** der Schritt des Reagierens auf einen Seitenfehler durch Bestimmen, ob der Seitenfehler die Folge eines Stapelzugriffs ist, das Bestimmen umfasst, dass der Seitenfehler die Folge eines Stapelzugriffs ist, falls das höchstwertige Bit der den Fehler verursachenden Adresse eine 1 ist.

2. Verfahren nach Anspruch 1, wobei die Superseite mehrere zusammenhängende Seiten normaler Größe (Pₙ) umfasst.

3. Verfahren nach Anspruch 1, wobei die Seite normaler Größe 4 Kilobyte umfasst.

4. Verfahren nach Anspruch 1, wobei die Superseite 2 Megabyte umfasst.

5. Verfahren nach Anspruch 1, wobei die Superseite eine Größe umfasst, die aus einer vorbestimmten Gruppe von Größen gewählt ist.

6. System (500), umfassend:
einen Prozessor (570), der einen ersten Kern (574a), der dafür ausgelegt ist, Anweisungen auszuführen, und einen mit dem ersten Kern gekoppelten Übersetzungspuffer (Translation Lookaside Buffer, TLB) (138) aufweist, wobei der TLB dafür ausgelegt ist, mehrere Einträge (TLBa-TLBd) zu speichern, die jeweils einen Übersetzungsabschnitt aufweisen, um eine Übersetzung einer virtuellen Adresse, VA, in eine physische Adresse, PA, zu speichern;
einen dynamischen Direktzugriffsspeicher (Dynamic Random Access Memory, DRAM) (532), der mit dem Prozessor gekoppelt ist, wobei der DRAM dafür ausgelegt ist, eine Seitentabelle (130) zu speichern, die Seitentabelleneinträge (Page Table Entries, PTE) für mehrere Speicherseiten im DRAM aufweist, wobei sich die Seitentabelle in einem Speicherraum der Kernel-Ebene befindet; und
einen Seitenfehler-Handler (240), der dafür ausgelegt ist, in Reaktion auf einen Seitenfehler Seitentabelleneinträge und TLB (138) -Einträge zu erzeugen, wobei der Seitenfehler-Handler dafür ausgelegt ist zu bestimmen, ob ein Seitenfehler die Folge eines Stapelzugriffs ist, und:
einen Superseiten-Tabelleneintrag in der Seitentabelle (130) zu erzeugen und einen entsprechenden TLB (138) -Eintrag für die Superseite zu erzeugen, falls der Seitenfehler die Folge eines Stapelzugriffs ist, und
einen Tabelleneintrag einer Seite normaler Größe in der Seitentabelle (130) zu erzeugen, falls der Seitenfehler nicht die Folge eines Stapelzugriffs ist,
**dadurch gekennzeichnet, dass** der Seitenfehler-Handler (240) dafür ausgelegt ist zu bestimmen, dass der Seitenfehler die Folge eines Stapelzugriffs ist, falls das höchstwertige Bit der den Fehler verursachenden Adresse eine 1 ist.

7. System nach Anspruch 6, wobei die Superseite mehrere zusammenhängende Seiten normaler Größe umfasst.

8. System nach Anspruch 6, wobei die Seite normaler Größe 4 Kilobyte umfasst.

9. System nach Anspruch 6, wobei die Superseite eine Größe umfasst, die aus einer vorbestimmten Gruppe von Größen gewählt ist.

## Revendications

1. Procédé d'exploitation d'un système (500), le procédé effectué par le système comprenant les étapes consistant à :
répondre (402) à une erreur de page en déterminant si l'erreur de page résultait d'un accès à la pile ;
créer (404) une superpage dans une table de pages (130) et créer (404) une entrée correspondante de tampon latéral de traduction, TLB (138), pour la superpage si l'erreur de page résultait effectivement d'un accès à la pile ; et
créer (406) une page de format normal dans la table de pages (130) si l'erreur de page ne résultait pas d'un accès à la pile,
**caractérisé en ce que** l'étape consistant à répondre à une erreur de page en déterminant si l'erreur de page était le résultat d'un accès à la pile comprend la détermination que l'erreur de page résulte d'un accès à la pile si le bit le plus significatif de l'adresse fautive est un 1.

2. Procédé selon la revendication 1, dans lequel la superpage comprend une pluralité de pages de format normal contiguës (Pₙ).

3. Procédé selon la revendication 1, dans lequel la page de format normal comprend 4 kilo-octets.

4. Procédé selon la revendication 1, dans lequel la superpage comprend 2 méga-octets.

5. Procédé selon la revendication 1, dans lequel la superpage comprend un format choisi dans un groupe prédéterminé de formats.

6. Système (500), comprenant :
un processeur (570) comprenant un premier noyau (574a) adapté pour exécuter des instructions, un tampon latéral de traduction, TLB, (138) couplé au premier noyau, le TLB étant adapté pour stocker une pluralité d'entrées (TLBa à TLBd) ayant chacune une portion de traduction pour stocker une traduction d'une adresse virtuelle, VA, en une adresse physique, PA ;
une mémoire vive dynamique, DRAM, (532) couplée au processeur, la DRAM étant opérationnelle pour stocker une table de pages (130) comprenant des entrées de table de pages (PTE) pour une pluralité de pages de mémoire dans la DRAM, la table de pages étant située dans l'espace au niveau du noyau ; et
un gestionnaire d'erreur de page (240) adapté pour créer des entrées de table de pages et des entrées de TLB (138) en réponse à une erreur de page, le gestionnaire d'erreur de page étant adapté pour déterminer si une erreur de page résultait d'un accès à la pile, et pour :
créer une entrée de table de superpages dans la table de pages (130) et créer une entrée correspondante de TLB (138) pour la superpage si l'erreur de page résultait effectivement d'un accès à la pile, et
créer une entrée de table de pages de format normal dans la table de pages (130) si l'erreur de page ne résultait pas d'un accès à la pile,
**caractérisé en ce que** le gestionnaire d'erreur de page (240) est adapté pour déterminer que l'erreur de page résulte d'un accès à la pile si le bit le plus significatif de l'adresse fautive est un 1.

7. Système selon la revendication 6, dans lequel la superpage comprend une pluralité de pages de format normal contiguës.

8. Système selon la revendication 6, dans lequel la page de format normal comprend 4 kilo-octets.

9. Système selon la revendication 6, dans lequel la superpage comprend un format choisi parmi un groupe prédéterminé de formats.
